# EUROPÄISCHE PATENTSCHRIFT

(11) **EP 0 353 346 B1**
(45) Veröffentlichungstag und Bekanntmachung des Hinweises auf die Patenterteilung: **24.03.1993**
(21) Anmeldenummer: 88118387.5
(22) Anmeldetag: 04.11.1988
(51) Int. Cl.: H02K 5/128

(54) **Spalttopf für stopfbuchsenlose elektrische oder magnetische Antriebsaggregate**
Gab-pot for glandless electric or magnetic drive assemblies
Pot d'entrefer pour entraînements sans presse-étoupe électriques ou magnétiques

(30) Priorität: 03.06.1988 DE 3818832
(43) Veröffentlichungstag der Anmeldung: 07.02.1990
(73) Patentinhaber: URANIT GmbH, D-52409 Jülich (DE)
(72) Erfinder: Schmitz, Bernd-Horst, D-5190 Stolberg (DE); Humpert, Josef, D-5162 Niederzier (DE); Corr, Horst, D-5132 Übach-Palenberg (DE)
(74) Vertreter: Gottlob, Peter, Dipl.-Ing.

(56) Entgegenhaltungen:
- DE-U- 6 604 973
- DE-U- 8 709 209
- US-A- 4 115 038

## Beschreibung

Die Erfindung betrifft einen Spalttopf für stopfbuchsenlose elektrische oder magnetische Antriebsaggregate gemäß dem Oberbegriff von Patentanspruch 1.

Aus der DE-OS 36 36 404 ist eine Magnetkreiselpumpe mit einem gegen das gepumpte Medium dichtenden Spalttopf bekannt, der aus zwei ineinandergesteckten, elektrisch nicht leitenden Töpfen besteht. Der innere Topf ist aus einem chemisch beständigen Werkstoff, der äußere Topf aus einem Faserverbundwerkstoff, z.B. kohlefaserverstärktem Kunststoff (CFK) oder kohlefaserverstärktem Kohlenstoff (CFC) hergestellt. Dadurch werden im Vergleich zu metallischen Spalttöpfen im Spalttopfmantel induzierte Wirbelströme und die damit verbundenen Verluste bei der Leistungsübertragung vermieden. Über den konstruktiven Aufbau des äußeren Topfes werden in dieser Druckschrift jedoch keine näheren Angaben gemacht.

Aus dem DE-GM 87 09 209 ist ein Elektromotor mit einem Spaltrohr und einem Lagerschild bekannt, deren konstruktiver Aufbau im Prinzip dem gattungsgemäßen Spalttopf entspricht. Bei dieser Konstruktion müssen die Druckkräfte des Mediums vom Motorgehäuse aufgenommen werden. In vielen Anwendungsfällen, insbesondere bei Pumpaggregaten, wird jedoch ein freitragender Spalttopf mit integralem Bodenteil und Anschlußflansch im Sinne der zuerst erörterten Bauart verlangt.

Der Erfindung liegt die Aufgabe zugrunde, einen Spalttopf unter Verwendung von faserverstärktem Kunststoff so zu gestalten, daß er für eine Serienfertigung geeignet ist und auch bei hohen Drücken des Mediums einen langfristigen und sicheren Betrieb des damit ausgestatteten Antriebsaggregats ohne Abstützung des Mantels oder des Bodens an das Aggregatgehäuse gestattet.

Zur Lösung dieser Aufgabe werden die im Kennzeichen von Anspruch 1 genannten Maßnahmen vorgeschlagen. Die hierauf bezogenen Unteransprüche beinhalten vorteilhafte Ausgestaltungen dieser Lösung, durch die auch der Einsatz bei erhöhten Betriebstemperaturen des Mediums bzw. bei korrosiven oder abrasiven Medien ermöglicht wird.
Die Erfindung erleichtert die Serienfertigung, da in einem Arbeitsgang ein langes Rohr gewickelt werden kann, das in eine Vielzahl von Topfmänteln unterteilt wird. Durch die Gestaltung des Topfbodens und die Art seines Zusammenfügens mit dem Mantel wird eine dauerhafte und auch hohen Drücken des Mediums standhaltende Verbindung gewährleistet bei sehr geringen Wandstärken des Mantels.

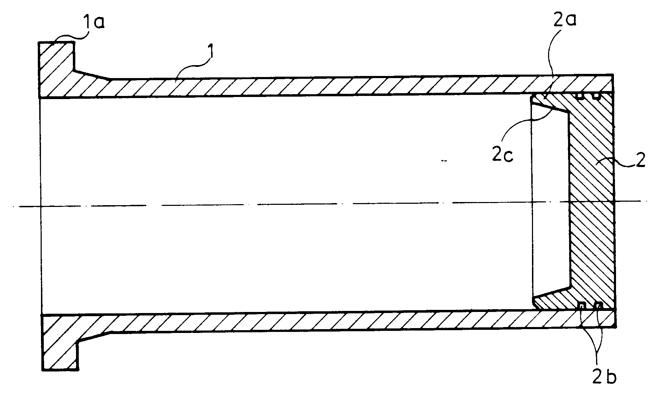

Ein Ausführungsbeispiel der Erfindung wird im folgenden anhand der Zeichnung erläutert:
Die Figur zeigt einen freitragenden Spalttopf aus kohlefaserverstärktem Kunststoff, bestehend aus einem Mantel 1 und einem Bodenteil 2. Zur Herstellung des Mantels 1 werden mit Kunstharz getränkte Kohlefasern auf einen Wickeldorn gewickelt, der nach dem Aushärten des Kunstharzes entfernt wird. Dabei werden abwechselnd Schichten mit Umfangswicklungen und Schichten mit Helixwicklungen aufgebracht. Die Helixwicklungen werden, zur Längsachse des Mantels 1 gemessen, mit einem Winkel zwischen 10° und 40° gewickelt. Das Verhältnis der Schichtdicken von Helixwicklungen zu Umfangswicklungen beträgt etwa 2:1. Für einen Innendruck des Topfes von 100 bar ist eine Gesamtdicke des Mantels 1 von nur 1 mm erforderlich; bei 25 bar kann die Wanddicke auf 0,5 mm reduziert werden. Das offene Ende des Mantels 1 ist durch zusätzliche Umfangswicklungen zu einem Anschlußflansch 1a erweitert. Mit einem Überwurfring oder dergleichen wird der Flansch an dem Pumpen- oder Motorgehause dicht befestigt und zentriert.

Das Bodenteil 2 ist im Vergleich zum Mantel 1 dickwandiger ausgeführt. Es kann ebenfalls aus CFK bestehen mit radial und peripher verlaufenden Kohlefasern. Wie aus der Figur zu ersehen ist, hat das Bodenteil 2 eine napfförmige Gestalt mit einem hochgezogenen, sich in axialer Richtung zum Spalttopfinnenraum erstreckenden, zungen- oder schürzenförmigen Rand 2a. Es ist mit einer Preßpassung in den Mantel 1 eingeklebt. Der Rand 2a verjüngt sich mit seiner Innenfläche 2c vom Boden zum Spalttopfinnenraum hin. Außerdem hat das Bodenteil 2 zwei Umfangsrillen 2b zur Aufnahme von Klebstoff.

Der konisch sich verjüngende Rand 2a verleiht dem Bodenteil 2 in diesem Bereich eine Elastizität in radialer Richtung, so daß durch den Druck des gepumpten Mediums im Spalttopf das Bodenteil 2 über seinen Rand 2a zusätzlich zum Preßsitz gegen die Innenwand des Mantels 1 gedrückt wird. Dadurch wird auch bei Dehnungen des Mantels 1 durch den Druck des Mediums eine dichte und dauerhafte Verbindung zwischen Bodenteil 2 und Mantel 1 gewährleistet. Soll der Spalttopf bei erhöhten Betriebstemperaturen des Mediums eingesetzt werden, so wird ein Klebstoff verwendet, der bei dieser Betriebstemperatur oder leicht darüber aushärtet. Dadurch werden Spannungen in der Klebschicht während des Betriebs reduziert.

Bei korrosiven oder abrasiven Medien können die hiermit in Berührung kommenden Oberflächen des Spalttopfes, normalerweise die Innenflächen, nach dem Zusammenfügen von Mantel und Bodenteil mit einer Schutzschicht versehen werden. Bewährt haben sich z.B. durch Plasma-Spritzen aufgebrachte Schutzschichten aus teilstabilisiertem Zirkonoxid mit einer Schichtdicke bis zu 0,2 mm, die je nach Einzelfall auch dicker gestaltet werden können. Je nach den gestellten Anforderungen können in bekannter Weise auch mehrere Schichten aus unterschiedlichen Werkstoffen und Verfahren übereinander aufgetragen werden. Z.B. werden zuerst duktile Schichten und anschließend keramische Schichten aufgebracht. Es sind ebenfalls z.B. Kombinationen des Plasma-Spritzens mit galvanischen Verfahren möglich.

### Bezugszeichenliste:

- 1: Mantel
- 1a: Anschlußflansch
- 2: Bodenteil
- 2a: zungen- oder schürzenförmiger Rand des Bodenteils 2
- 2b: Umfangsrillen im Bodenteil 2
- 2c: Innenfläche des Randes 2a

## Patentansprüche

1. Spalttopf für stopfbuchsenlose elektrische oder magnetische Antriebsaggregate, dessen Mantel (1) aus Schichten aus faserverstärktem Kunststoff besteht, wobei sich Schichten mit Umfangswicklungen und Helixwicklungen abwechseln und wobei das offene stirnseitige Ende (1a) des Mantels durch zusätzliche Umfangswicklungen verstärkt ist,
gekennzeichnet durch folgende Merkmale:
a) das Bodenteil (2) des Spalttopfes hat eine napfförmige Gestalt mit einem sich in axialer Richtung zum Spalttopfinnenraum hin erstreckenden, zungenförmigen Rand (2a) und ist mit einem Preßsitz in den Mantel (1) eingeklebt;
b) der zungenförmige Rand (2a) verjüngt sich mit seiner Innenfläche (2c) vom Boden zum Spalttopfinnenraum hin;
c) das durch Umfangswicklungen verstärkte offene Ende des Mantels (1) ist zu einem Anschlußflansch (1a) erweitert.

2. Spalttopf nach Anspruch 1, dadurch gekennzeichnet, daß das Bodenteil (2) ebenfalls aus faserverstärktem Kunststoff besteht.

3. Spalttopf nach Anspruch 1 oder 2, dadurch gekennzeichnet, daß
das Bodenteil (2) eine oder mehrere Umfangsrillen (2b) zur Aufnahme des Klebstoffs aufweist, und daß der Klebstoff eine Aushärtetemperatur hat, die der Betriebstemperatur des Spalttopfes entspricht oder etwas darüber liegt.

4. Spalttopf nach Anspruch 1 und 2, dadurch gekennzeichnet, daß
seine Innen- und/oder Außenfläche wenigstens eine korrosions- oder verschleißfeste Zusatzschicht, z.B. aus teilstabilisiertem Zirkonoxid, aufweist.

## Claims

1. Gap-pot for glandless, electric or magnetic drive assemblies, the casing (1) of which pot is formed from layers of fibre-reinforced plastics material, wherein layers alternate with circumferential windings and helical windings, and wherein the open front end (1a) of the casing is reinforced by additional circumferential windings, characterised by the following features:
a) the bottom portion (2) of the gap-pot has a cup-shaped configuration having a tongue-like edge (2a), which extends in an axial direction towards the interior of the gap-pot, and said bottom portion is adhered in position in the casing (1) by a press-fit;
b) the tongue-like edge (1a) tapers with its internal surface (2c) from the bottom towards the interior of the gap-pot;
c) the open end of the casing (1), reinforced by circumferential windings, is widened to form a connection flange (1a).

2. Gap-pot according to claim 1, characterised in that the bottom portion (2) is also formed from fibre-reinforced plastics material.

3. Gap-pot according to claim 1 or 2, characterised in that the bottom portion (2) has one or more circumferential grooves (2b) to accommodate the adhesive, and in that the adhesive has a hardening temperature which corresponds to the operational temperature of the gap-pot or is somewhat higher.

4. Gap-pot according to claims 1 and 2, characterised in that its internal and/or external surface have or has at least one additional corrosion- or wear-resistant layer, e.g. formed from partially stabilized zirconium oxide.

## Revendications

1. Pot d'entrefer pour des unités d'entraînements électriques ou magnétiques sans presse-étoupe, pot dont l'enveloppe (1) est constituée par des couches de matières synthétiques renforcées par des fibres, tandis que des couches à enroulements périphériques alternent avec des couches à enroulements hélicoïdaux, et tandis que l'extrémité frontale ouverte (1a) de l'enveloppe est renforcée par des enroulements périphériques supplémentaires, pot d'entrefer caractérisé en ce que :
a) la partie de fond (2) du pot d'entrefer a une forme en cuvette avec un bord en forme de languette (2a) s'étendant en direction axiale vers l'espace interne du pot d'entrefer et est collée à ajustage serré dans l'enveloppe (1),
b) le bord en forme de languette (2a) va en s'amincissant par sa face interne (2c) depuis le fond vers l'espace interne du pot d'entrefer,
c) l'extrémité ouverte renforcée par des enroulements périphériques de l'enveloppe (1) est élargie pour constituer une bride de raccordement (1a).

2. Pot d'entrefer selon la revendication 1, caractérisé en ce que la partie de fond (2) est également constituée par de la matière plastique renforcée par des fibres.

3. Pot d'entrefer selon la revendication 1 ou la revendication 2, caractérisé en ce que la partie de fond (2) comporte une ou plusieurs rainures périphériques (2b) pour recevoir la colle, et en ce que cette colle a une température de durcissement qui correspond à la température de fonctionnement du pot d'entrefer ou bien se situe un peu au-dessus.

4. Pot d'entrefer selon la revendication 1 et la revendication 2, caractérisé en ce que sa face interne et/ou externe comporte au moins une couche supplémentaire résistant à la corrosion ou à l'usure, par exemple un oxyde de zirconium partiellement stabilisé.
